(19) Europäisches Patentamt / European Patent Office / Office européen des brevets

(11) **EP 1 635 269 B1**

(12) **EUROPEAN PATENT SPECIFICATION**

(45) Date of publication and mention
of the grant of the patent:
**15.04.2020   Bulletin 2020/16**

(51) Int Cl.:
*G06T 11/20* (2006.01)      *G06F 17/24* (2006.01)

(21) Application number: **05104617.5**

(22) Date of filing: **30.05.2005**

(54) **Functions acting on arbitrary geometric paths**

Auf willkürliche geometrische Pfade bezogene Funktionen

Fonctions employant les segments géometriques arbitraires

(84) Designated Contracting States:
**AT BE BG CH CY CZ DE DK EE ES FI FR GB GR
HU IE IS IT LI LT LU MC NL PL PT RO SE SI SK TR**

(30) Priority: **14.09.2004   US 940445**

(43) Date of publication of application:
**15.03.2006   Bulletin 2006/11**

(73) Proprietor: **Microsoft Technology Licensing, LLC
Redmond, WA 98052 (US)**

(72) Inventor: **Hobbs, Craig A.
Redmond, WA 98052 (US)**

(74) Representative: **Grünecker Patent- und
Rechtsanwälte
PartG mbB
Leopoldstraße 4
80802 München (DE)**

(56) References cited:
**US-B1- 6 172 683      US-B1- 6 373 490
US-B1- 6 628 285**

**Description**

TECHNICAL FIELD

The present invention is directed to the field of software applications for creating or modifying drawings containing geometric shapes.

BACKGROUND

Drawing applications like MICROSOFT VISIO enable users to create drawing documents. For example, a user may use a drawing application to add a straight or curved line segment to a drawing document. A user can concatenate such segments to create a more complex shape. Indeed, it is common for predefined shapes provided with a drawing application for users to incorporate in drawing documents in a single step to be defined as a concatenation of segments, also called a "path."

After a user incorporates such a predefined shape in a drawing document, the user can manipulate it in a variety of ways, such as resizing it in one or both dimensions, attaching text, connectors, or callouts, etc.

Some drawing applications use a spreadsheet engine to perform calculations involved in creating or modifying a drawing document. In particular, a drawing application may represent all or part of a drawing document as one or more spreadsheets comprised of cells each containing a value related to the drawing document.

For example, a drawing application may have a user interface that permits a user to create and place new object instances, such as a predefined shape, or a user-defined shape. In some drawing applications, each object instance created by a user is represented by data stored in one or more spreadsheets. Where a user uses the user interface to modify an existing object instance, the drawing application typically responds by modifying some of the spreadsheet data representing the object, which in turn changes the way that the object instance is subsequently displayed.

Some predefined shapes include special features, such as textual labels or connectors that are aligned relative to a particular point on the shape, such as a vertex of the shape, or in the center of one of the segments that make up the shape. Creating a predefined shape having such special features often involves a significant level of manual effort on the part of the developer. Where such a predefined shape is subject to modifications by the user, such as resizing the shape, changing its aspect ratio, deforming the shape, etc., designing the shape to properly display its special features no matter how it is modified by a user can be particularly difficult.

Further, while it would be desirable to provide such special features for use with user-defined shapes and other user-defined paths, no tools are available that would make it possible to do so.

In view of the above discussion, new functionality for supporting special drawing features for arbitrary paths would have significant utility.

US 6,373,490 B1 concerns a graphical rendering system and method which stores generated and calculated path parameters along the entire user drawn path. These stored parameters are then editable or otherwise filtered at any point so as to create for the user different effects without the necessity of redrawing any portion of the path. The user has full editability of all the brush parameters which means the user can change the type of brush or can just tweak little parts of the way the brush stroke is rendered. The user has full editability of all the polyline sample data which includes the geographical location, velocity, pressure and a random seed value stored at every sample point.

US 2002/0109704 A1 concerns a method and system providing a dynamic, live (active) surface and/or model elements to complement and enhance what is being modeled or visualized, enabling the addition of new features and functionality to visualization and modeling tools. A dynamic surface is accomplished by extending traditional HTML, rendering APIs and/or components to enable visualization and modeling functionality. The surface background and model elements may comprise HTML elements, and the surface can include a Web site. The model elements are HTML elements layered dynamically atop the surface, as the user interacts with them, and completed designs may be saved in a non-proprietary format, (e.g., HTML). The live surface bases its services on HTML rendering engine services, and further provides a visualization and modeling engine that wraps and extends the rendering engine through multiple interfaces. Interfaces can enumerate modeling elements and their relationships, add, delete or change connections between model elements and states, and initialize the surface, including loading an existing diagram such as saved as an HTML document.

US 5,467,441 discloses a method in a computing system for evaluating a spreadsheet cell, comprising: reading a function call stored in the spreadsheet cell, the function call specifying an arbitrary geometric path, and an operation to be performed on the specified path; performing the specified operation on the -specified path; and attributing one or more values produced by performing the specified operation on the specified path as the evaluated value of the spreadsheet cell.

It is the object of the present invention to provide an improved computer-readable medium, method and computing system for providing geometric paths.

This object is solved by the subject matter of the independent claims.

Preferred embodiments are defined by the dependent claims.

BRIEF DESCRIPTION OF THE DRAWINGS

Figure 1 is a block diagram showing some of the components typically incorporated in at least some of the computer systems and other devices on which the facility executes.

Figure 2 is a component diagram showing components used by the facility and their interactions.

Figure 3 is a document diagram showing sample path coordinates relative to a sample path.

Figure 4 is a document diagram showing different ranges of t for a sample path.

Figure 5 is a drawing diagram showing a path that, when placed in a document in such a way that it overlaps other line segments in the drawings, has line jumps added to it.

Figure 6 is a path diagram showing the normalized path to find in the normalized path definition shown in Table 4.

Figure 7 is a document diagram showing the cases that can be specified for the POINTINPATH function.

Figure 8 is a drawing diagram showing a first function usage example.

Figure 9 is a document diagram showing an initial state of the first example.

Figure 10 is a document diagram showing the second example in a second state.

DETAILED DESCRIPTION

Introduction

A software facility for providing functions that perform operations on arbitrarily-defined paths and may be called from spreadsheet cells-such as spreadsheet cells used to represent a drawing produced using a drawing application-("the facility") is described. Developers may use these functions, for example, to define predefined shapes having a variety of special features. Developers may further use these functions to enable users of a drawing program to themselves create shapes and other paths and apply special features to them.

Such special features can include text bound to a shape or other path, or tangent to a shape or other path; and displayed indications of a shape's area and/or the lengths of its sides.

In some embodiments, the facility provides functions that perform operations on arbitrary paths such as the following: determine the length of a path; determine the area of a closed path; determine a point a certain percentage of the way along a path; determine the point on a path nearest another point; determine the number of segments in a path; determine the shape of a tangent to a path at a particular point on its length; and determine the intersection of two paths.

In some embodiments, the functions provided by the facility can be called either with respect to an entire path, or with respect to a particular segment of the path. In some embodiments, the functions provided by the facility can be called with reference either an absolute or relative position on a path or path segment.

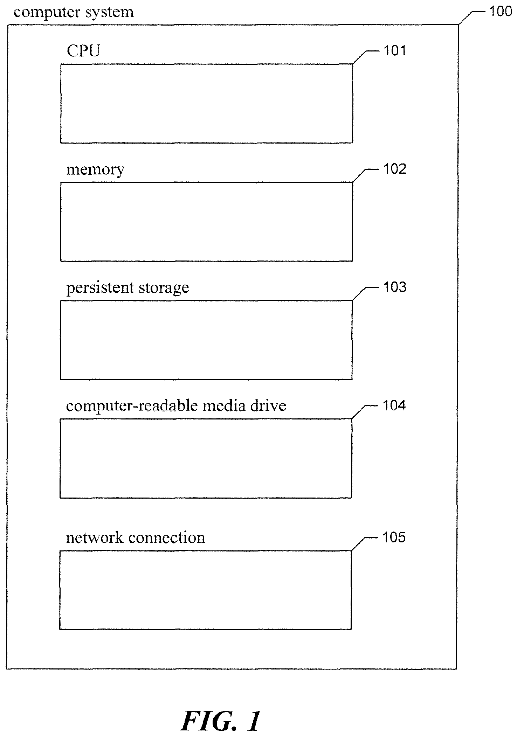

Figure 1 is a block diagram showing some of the components typically incorporated in at least some of the computer systems and other devices on which the facility executes. These computer systems and devices 100 may include one or more central processing units ("CPUs") 101 for executing computer programs; a computer memory 102 for storing programs and data-including data structures-while they are being used; a persistent storage device 103, such as a hard drive, for persistently storing programs and data; a computer-readable media drive 104, such as a CD-ROM drive, for reading programs and data stored on a computer-readable medium; and a network connection 105 for connecting the computer system to other computer systems, such as via the Internet, to exchange programs and/or data-including data structures. While computer systems configured as described above are typically used to support the operation of the facility, one of ordinary skill in the art will appreciate that the facility may be implemented using devices of various types and configurations, and having various components.

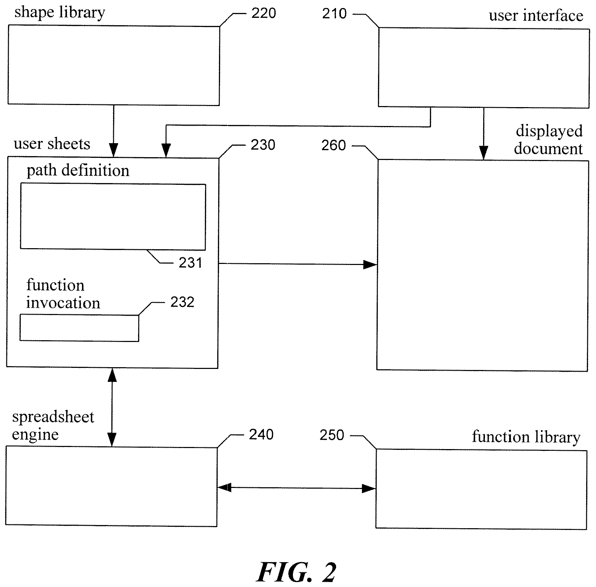

Figure 2 is a component diagram showing components used by the facility and their interactions. To add a shape to a drawing document, a user uses a user interface 210 of the drawing application to select a shape from a shape library 220 and place it in the document. As a result of these user interface manipulations, data is added to one or more user spreadsheets 230 representing the document. The added data includes a path definition 231, as well as invocations 232 of one or more of the functions provided by the facility that each refer to the path definition. In order to resolve the function invocation, a spreadsheet engine 240 calls the function in a function library 250. The shape is then displayed in the displayed document 260 based on the contents of the path definition and one or more values produced in evaluating the function invocation.

In some embodiments, when any of the path definition data changes, the spreadsheet engine reevaluates each function that refers to the path definition by again calling the function.

Context of Functions

Each function takes at least path reference argument (identified below as "pathRef," and variants) that identifies a path-i.e., a series of curved or straight segment geometry objects-on which the function will work. This reference may vary in its implementation depending on the spreadsheet engine. In some embodiments, a path reference contains the identity of a special path reference cell (e.g., the path reference cell's row/column location or name) that represents a larger group of cells that together define the path, such as a geometry row. For example, to compute the length of a geometric path defined in a set of cells represented by a path reference cell named Geometry1.Path, a call to the PATHLEN function-discussed further below-passing Geometry1.Path as the PATHLEN function's path reference argument, is stored in a cell named User.Tmp:

$$User.Tmp = PATHLEN(Geometry1.Path)$$

In some embodiments, special implied trigger recalculation logic is attached to each path reference cell, so that when any cell that affects the referred-to geometry changes, the referring function call is also recalculated.

Some functions allow the caller to specify operation on a specific segment of a path. The segment is referenced by a segment type (identified below as "SegType," and variants) and a segment index (identified below as "segIX," and variants). Table 1 below shows the available segment types:

TABLE 1

| | |
|---|---|
| PSType_WholePath = 0 | The whole path (the default) |
| PSType_FromBegin = 1 | Segment indexed from begin |
| PSType_FromEnd = 2 | Segment indexed from end |

The segment type and segment index arguments are typically optional. If not provided, the segment type is PSType_WholePath, the segment index is ignored, and the entire path is referenced. If the segment type is PSType_FromBegin, the segment index is used to select a segment from the beginning of the path, where the index 0 specifies the first segment of the path. If the segment type is PSType_FromEnd, the segment index is used to select a segment from the end of the, where the index 0 specifies the last segment of the path.

A #REF error is returned by the function if an invalid segment type or an invalid segment index is provided.

By employing end semantics (PSType_FromEnd) in the segment type, the facility permits logic such as "give me the point half way along the last segment" to be easily expressed. This is especially important for shapes that have an unpredictable number of segments in them, such as the Visio dynamic connector.

Several of the geometry functions take Cartesian coordinates (x, y) as arguments. These are assumed to be in the local coordinate space of the given path reference. No coordinate transformation is done on these arguments.

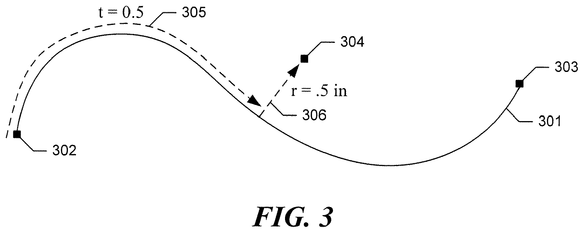

Several of the geometry functions take path coordinates (t, r) as arguments. In their simplest form, t is a percentage along the path and r is the distance offset from that point perpendicular to the path at that point. Figure 3 is a document diagram showing sample path coordinates relative to a sample path. Figure 3 shows a path having a single, curved segment 301. The curve has beginning point 302 and end point 303. The figure shows a point 304 having path coordinates (0.5, .5 in.). It can be seen that the point 304 can be reached by, in accordance with t=0.5, traversing 50% of the way from path beginning point 302 to path end point 303, then, in accordance with r=.5 in., traversing one-half inch normal to the segment at that point.

Geometry functions that take path coordinates as parameters typically also have an optional parameter type argument (identified below as "paramType," and variants) that allows the user to express the parameter t in different forms. Table 2 below shows the available parameter types:

TABLE 2

| | |
|---|---|
| PPType_Percentage = 0 | Percent along path/segment from begin (the default) |
| PPType_PercentageEnd = 1 | Percent along path/segment from end |
| PPType_Distance = 2 | Distance along path/segment from begin |
| PPType_DistanceEnd = 3 | Distance along path/segment from end |

If the parameter type is not provided it defaults to PPType_Percentage. For PPType_Percentage, t = 0 is the begin point of the path and t = 1 is the end point of the path. For t < 0, t is understood to be -t distance along the ray defined by the path's begin point in the direction of the path's tangent angle at it's begin point. For t > 0, t is understood to be t-1 distance along the ray defined by the path's end point in the direction of the paths tangent angle at its end point.

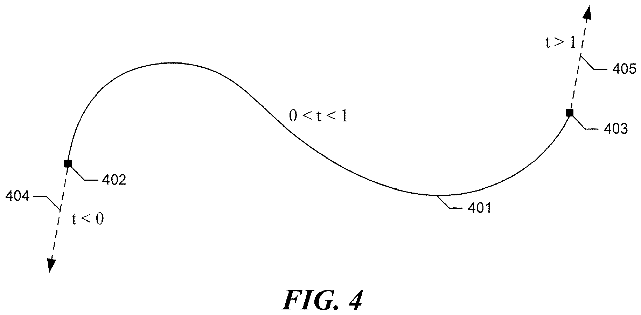

Figure 4 is a document diagram showing different ranges of t for a sample path. Figure 4 shows a path made up of a single, curved segment 401. The path has starting point 402 and ending point 403. Values of t between 0 and 1 fall directly on curved segment 401. Negative values of t fall on a ray whose origin is at starting point 402, and whose direction is the tangent of curved segment 401 at starting point 402. Similarly, values of t greater than 1 fall on a ray 405 that has as its origin the ending point 403 of the curved segment and has as its direction the tangent to the curved segment at its ending point 403.

The other parameter types can all be transformed into PPType_Percentage. Thus, when a geometry function is called with a non-default parameter type, it can transform into the PPType_Percentage form and proceed with its operation in a normalized space. The transformations from the non-default parameter types to PPType_Percentage are defined as follows.

PPType_PercentageEnd defines t = 0 as the path's end point and t = 1 as the path's begin point. PPType_PercentageEnd is transformed into PPType_Percentage with the simple formula "1 - t".

PPType_Distance defines t as a distance along the path from the begin point. For 0 < t < length (the path's length), PPType_Percentage is achieved with the formula "t / length". For t < 0 no transformation is required - t is the same in PPType_Distance as it is in PPType_Percentage. For t > length, the transformation to PPType_Percentage is achieved with "t - length + 1 ".

PPType_DistanceEnd defines t as a distance along the path from the end point. For 0 < t < length (the path's length), PPType_Percentage is achieved with the formula "1 - t / length". For t < 0, the PPType_Percentage form is achieved with "1 - t". For t > length, the transformation to PPType_Percentage is achieved with "length - t".

A #VALUE error is returned by the function if an invalid parameter type argument is provided.

By giving parameter type distance semantics (PPType_Distance and PPType_DistanceEnd), the facility enables distances along a path to be easily computed.

By giving parameter type end semantics (PPType_PercentageEnd and PPType_DistanceEnd), the facility enables logic like ".5 inches from the end" to be easily expressed.

In some embodiments, when each function is called, the facility first creates a normalized version of each path passed to the function. One aspect of normalization is removing superficial segments added to the path by the drawing program in order to accommodate the path's context in a drawing. One example of these superficial segments are "line jumps": arc segments added to paths by some drawing programs to make clear that overlapping lines do not intersect.

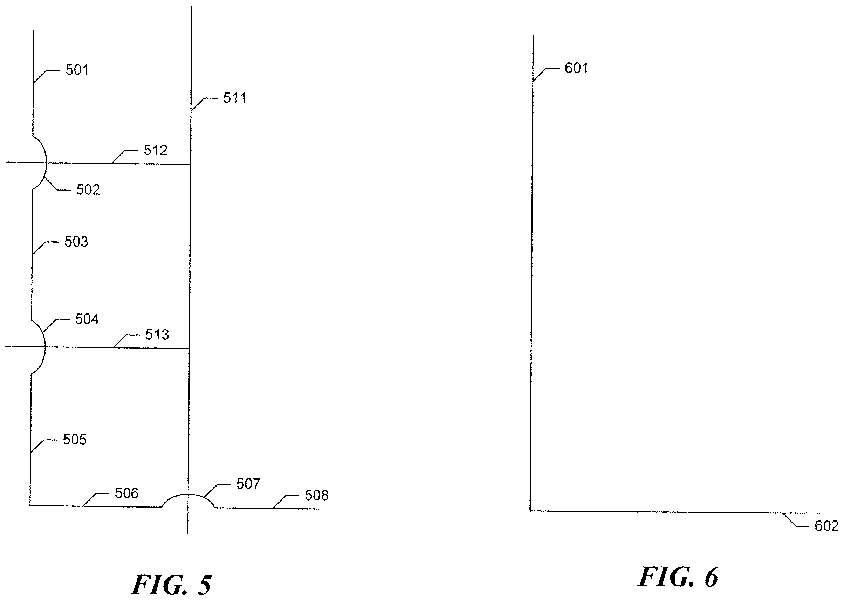

Figure 5 is a drawing diagram showing a path that, when placed in a document in such a way that it overlaps other line segments in the drawings, has line jumps added to it. The diagram shows this path, made up of segments 501-508, placed relative to other line segments 511-513. Arc segments 502, 504, and 507 are not substantive parts of the path, but were added automatically by the drawing program to make clear that the path does not intersect with line segments 511-513. A definition for this path is shown below in Table 3.

TABLE 3

| | geometry primitive | x | y | a |
|---|---|---|---|---|
| 1 | move to | 0 | 0 | |
| 2 | line to | 0 | .5 | |
| 3 | arc to | 0 | 1 | .3 |
| 4 | line to | 0 | 3 | |
| 5 | arc to | 0 | 3.5 | .3 |
| 6 | line to | 0 | 4.5 | |
| 7 | line to | 1 | 4.5 | |
| 8 | arc to | 1.5 | 4.5 | -.3 |
| 9 | line to | 2.5 | 4.5 | |

In order to normalize this path, the facility generates another path in which the arc to primitives shown on lines 3, 5, and 8 of Table 3 - corresponding to superficial path segments 502, 504, and 507 shown in Figure 5 - are removed; and merges the line to primitives formerly separated by an arc to primitive. This yields the normalized path definition shown below in Table 4.

TABLE 4

| geometry primitive | | x | y | a |
|---|---|---|---|---|
| 1 | move to | 0 | 0 | |
| 2 | line to | 0 | 4.5 | |
| 3 | line to | 2.5 | 4.5 | |

Figure 6 is a path diagram showing the normalized path defined in the normalized path definition shown in Table 4. It can be seen that the normalized path contains only two straight line segments, 601 and 602. Any function provided by the facility called with a reference to the path defined in the path definition shown in Table 3 performs this normalization, then performs subsequent operations on the normalized version of the path.

<u>Function Descriptions</u>

Functions provided by some embodiments of the facility are described below. A function argument wrapped in brackets ("[]") is, in some embodiments, an optional argument. An ellipsis ("...") indicates that a variable number of arguments is, in some embodiments, acceptable. While the functions are shown with arguments corresponding to a two-dimensional space, those skilled in the art will appreciate that the functions may be instead applied to a three-dimensional, using arguments appropriate therefor.

```
token PATHAREA (token& pathRef)
```

The PATHAREA function computes the area of a closed path. If the path is not closed, an area of zero is returned.

```
token PATHINT (token& pathRef1, token& pathRef2, [double
    xHint], [double yHint], [uint segType1], [ulong segIX1],
    [uint segType2], [ulong segIX2] )
```

The PATHINT function computes the nearest intersection of two paths nearest to (xHint, yHint). The result is a point (x, y) in coordinates local to pathRef1. The first path is defined by the arguments pathRef1, segType1, and segIX1. The second path is defined by the arguments pathRef2, segType2, and segIX2. The result will be the intersection of the paths nearest to xHint and yHint, or (0, 0) if xHint and yHint are not specified. If an intersection is not found then a #VALUE error is returned.

```
token PATHLEN (token& pathRef, [uint segType], [ulong segIX]
    )
```

The PATHLEN function computes the length of the path defined by pathRef, segType, and segIX.

```
token PATHPARAM (token& pathRef, double x, double y, [uint
    paramType], [uint segType], [ulong segIX])
```

The PATHPARAM function computes a point result (t, r) of the point on the path nearest to the given point (x, y). The path is defined by pathRef, segType, and segIX. The argument paramType defines the parameter type of the result t.

```
token PATHPOINT (token& pathRef, double t, double r, [uint
    paramType], [uint segType], [ulong segIX])
```

The PATHPOINT function computes a point result (x, y) of the point defined by the point (t, r) along the path. The path is defined by pathRef, segType, and segIX. The argument pathType defines the parameter type of the argument t.

```
token PATHRAYINT (token& pathRef, double x, double y, double
    angle, [double xHint], [double yHint], [uint segType],
    [ulong segIX])
```

The PATHRAYINT function computes the intersection of a path and an unbounded line. The path is defined by pathRef, segType, and segIX. The unbounded line is defined by the point (x, y) and the direction angle. The result will be the intersection of the paths nearest to xHint and yHint, or (0, 0) if xHint and yHint are not specified. If not intersection is found then a #VALUE error is returned.

```
token PATHSEGMENT (token& pathRef, double t, [uint
    paramType])
```

The PATHSEGMENT function computes the segment index that contains the point on a path defined by pathRef. The point is defined by a parameter, t, and the parameter type, paramType.

```
token PATHSIZE (token& pathRef)
```

The PATHSIZE function computes the number of segments in the path defined by pathRef.

```
token PATHTAN (token& pathRef, double t, [uint paramType],
    [uint segType], [ulong segIX])
```

The PATHTAN function computes the tangent angle at a point on a path. The path is defined by pathRef, segType, and segIX. The point is defined by the parameter, t, and the parameter type, paramType.

```
token POINTINPATH (token& pathRef, double x, double y, [bool
    outside], [double r])
```

The POINTINPATH function returns a Cartesian result point that is bound inside or outside of a path. The result is either the input point (x, y) or the nearest point which matches the bounding criteria. The bounding criteria is comprised of the path, pathRef, the inside/outside argument, outside, and the inset/outset distance, r. If the inside/outside argument is true, the function will return a point outside the path. If the inside/outside argument is false (the default), the function will return a point inside the path. The inset/outset distance allows the user to extend the bound.

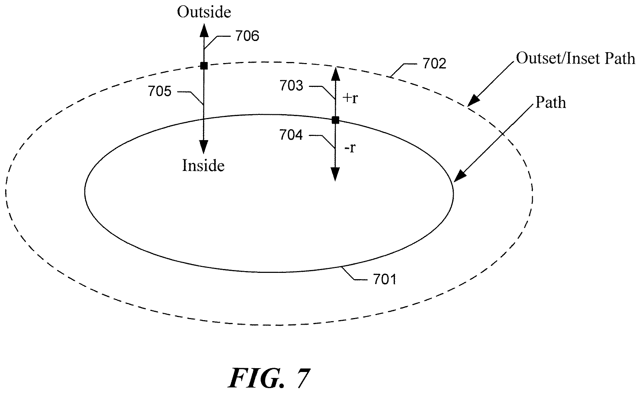

Figure 7 is a document diagram showing illustrating the cases that can be specified for the POINTINPATH function. Figure 7 shows a path 701. Figure 7 further shows an outset/inset path 702 that is based on path 701. For positive values of r 703, the outset/inset path is outside path 701 as shown. For negative values of r 704, the outset/inset path is inside path 701 (not shown). Depending upon the value of the outside argument, the function either tests for the point lying inside 705 the outside/inset path (for the value false), or outside 706 outset/inset path (for the value true).

The function performs the following processing. First, the input point (x, y) is hit-test on the path. In other words, the facility determines whether the point is inside the path. If the point is inside and the request is to bound inside, or if the point is outside and the request is to bound outside, and the outset, r, is zero, then the result is the input point (x, y). Otherwise, the facility computes the nearest point on the path to (x, y). If the outset, r, is zero then this is the result. Otherwise, the facility computes the distance from the point nearest to the input point (x, y). A value, rActual is defined as:

$$\text{double rActual} = (\text{bIsInside ? -distance : distance});$$

If the following condition is not met:

```
if ((bOutside && r < rOffset) || (!bOutside && r > rOffset))
```

then the result is the input point (x, y). Otherwise the facility computes the result point as the offset, r, in the direction of the normal angle from the path which is the defined by the nearest point and the point (x, y).

```
token POINTONPATH (token& pathRef, double x, double y,
    [double boundType], [double valuel], [double value2],
    ... )
```

The POINTONPATH function returns a Cartesian result point that is bound to a path. The path is defined by pathRef. The result is the nearest point on the path that matches the bound criteria. The bound criteria are comprised of a bound type, boundType, and a series of values. Any number of bound criteria may be provided. Table 5 below shows the available bound types:

TABLE 5

| Bound Type | Value Arguments |
| --- | --- |
| POPType_T_Inclusive = 0 | <tMin>, <tMax> |
| POPType_T_Exclusive = 1 | <tMin>, <tMax> |
| POPType_R_Inclusive = 2 | <rMin>, <rMax> |
| POPType_R_Exclusive = 3 | <rMin>, <rMax> |
| POPType_T_InclusiveEx = 4 | <paramType>, <tMin>, <tMax> |
| POPType_T_ExclusiveEx = 5 | <paramType>, <tMin>, <tMax> |
| POPType_Disabled = 6 | Disabled bound |

The path coordinates form (t, r) of the input point (x, y) is computed using the same process as PATHPARAM. The path coordinates form is then bound using the bound criteria. Suitable techniques for bounding the path coordinates form of the input point are described in the aforementioned U.S. Patent Application No. 10/811,234. The result point is then computed from the bound (t, r) using the same process as PATHPOINT.

Function Usage Examples

While the functions described herein can be used in a wide variety of ways, a few representative examples of their use follow:

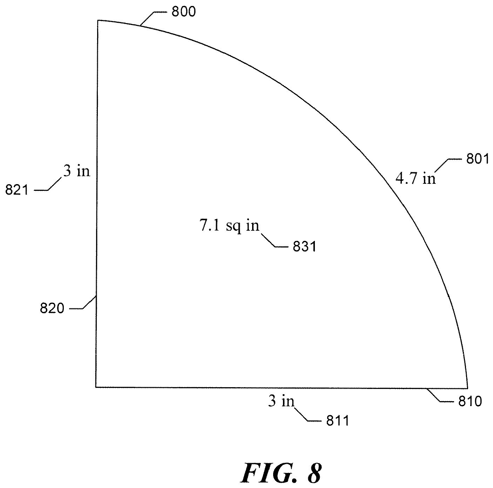

Figure 8 is a drawing diagram showing a first function usage example. The diagram shows a shape based upon a path having three segments 800, 810, and 820. The length and inches of each side of the shape, corresponding to each segment of the path are displayed: lengths 801, 811, and 821. Further, the area 831 of the region bounded by the shape is displayed in square inches inside the shape.

The side length and shape area indications can be generated using functions provided by the facility as follows: The shape are can be determined by calling the PATHAREA function as shown below:

```
PATHAREA (pathRef)
```

The number of segments in the path can be determined by calling the PATHSIZE function as shown below:

```
PATHSIZE (pathRef)
```

After determining that there are three segments in the path, the following three calls to the PATHLEN function may be made in order to determine the length of each side:

```
PATHLEN (pathRef, 1, 0)
PATHLEN (pathRef, 1, 1)
PATHLEN (pathRef, 1, 2)
```

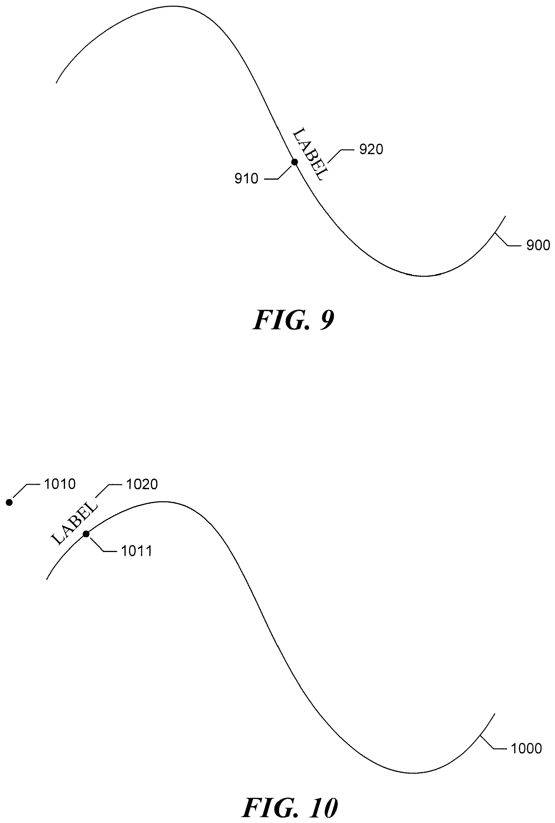

Figures 9 and 10 show a second function usage example. Figure 9 is a document diagram showing an initial state of the first example. Figure 9 shows a path containing a single segment 900. Label text 920 is displayed in conjunction with the path, based upon an initial, default placement of a control handle 910 in the center of the length of the path. By making the call below to the PATHPOINT function shown below, the initial Cartesian coordinates of the control point can be determined:

```
PATHPOINT (pathRef, .5, 0)
```

By making the call to the PATHTAN function shown below, the angle for displaying the label text can be determined.

```
PATHTAN (pathRef, .5)
```

Figure 10 is a document diagram showing the second example in a second state. Figure 10 shows the path after the user has moved control point 910 shown in Figure 9 to a new position, shown as control point 1010 in Figure 10. When the control point is moved, the call to POINTINPATH function shown below can be made in order to determine a new point 1011 at which to display the label text:

```
(x display point, Y display point) =
 POINTINPATH (pathRef, x control point, y control point)
```

The call to the POINTINPATH function returns to the Cartesian coordinates for display point 1011 on path 1000. To transform these Cartesian coordinates into path coordinates, the following call to the PATHPARAM function may be made:

```
(t display point, r display point) =
 PATHPARAM (pathRef, x control point, y control point)
```

The angle of the displayed text can then be determined by making the following call to the PATHTAN function:

```
PATHTAN (pathRef, t display point)
```

Those skilled in the art will appreciate that the functions described herein may be used for a wide variety of purposes beyond those discussed above.

Conclusion

It will be appreciated by those skilled in the art that the above-described facility may be straightforwardly adapted or extended in various ways. For example, in some embodiments, a call to any of the described functions can be included in any cell of any spreadsheet, irrespective of whether the spreadsheet is associated with a drawing program. In some embodiments, any of the described functions may be called using functionality of application programs other than spreadsheets, such as macro facilities exposed by word processing programs, or a variety of other kinds of scripting interfaces. In some embodiments, any of the described functions can be called from any program. While the foregoing description makes reference to preferred embodiments, the scope of the invention is defined solely by the claims that follow and the elements recited therein.

**Claims**

**1.** A computer-readable medium whose contents cause a computing system (100) to perform a method for evaluating a spreadsheet cell, comprising:

reading a function call stored in the spreadsheet cell, the function call specifying an arbitrary geometric path (701, 702; 1000), and an operation to be performed on the specified path;
performing the specified operation on the specified path; and
attributing one or more values produced by performing the specified operation on the specified path as the evaluated value of the spreadsheet cell.

**2.** The computer-readable medium whose contents cause a computing system (100) to perform the method of claim 1 wherein the read function call further specifies a point (304) in path coordinates, comprising a first path coordinate that specifies a position of an intermediate point on the path (701, 702; 1000) and second path coordinate that specifies a directed distance (306) from the intermediate point to the specified point.

**3.** The computer-readable medium of claim 2 wherein the path has a first end (302; 402) and a second end (303; 403), and wherein the first path coordinate specifies the position of the intermediate point on the path by specifying an absolute distance (305) from the first end of the path.

**4.** The computer-readable medium of claim 2 wherein the path has a first end (302; 402) and a second end (303; 403), and wherein the first path coordinate specifies the position of the intermediate point on the path by specifying a percentage of the total distance (305) from the first end of the path to the second end of the path.

**5.** The computer-readable medium of claim 2 wherein the path has a first end (302; 402) and a second end (303; 403), and wherein the read function call further specifies whether the first path coordinate specifies the position of the intermediate point on the path relative to the first end or the second end.

6. The computer-readable medium of claim 1 wherein the path is comprised of a series of segments, and wherein the read function call further specifies one of the series of segments on which the specified operation is to be performed.

7. The computer-readable medium of claim 6 wherein the path has a first end (302; 402) and a second end (303; 403), and wherein the read function call further specifies one of the series of segments by specifying either the first end or the second end of the path; and the number of segments away from the specified end the specified segment is.

8. The computer-readable medium of claim 1 wherein the specified path is defined in a set of path definition spreadsheet cells, the method further comprising reevaluating the spreadsheet cell containing the function call in response to determining that the value of one of the path definition spreadsheet cells of the set has changed.

9. The computer-readable medium of claim 1 wherein the function call specifies the path by containing a reference to a path spreadsheet cell representing the path.

10. The computer-readable medium of claim 9 wherein the reference to the path spreadsheet cell identifies the path spreadsheet cell by name.

11. The computer-readable medium of claim 9 wherein the reference to the path spreadsheet cell identifies the path spreadsheet cell by location.

12. The computer-readable medium of claim 1 wherein the read function call further specifies a point (304) in path coordinates, comprising a first path coordinate that specifies a position of an intermediate point on the path and second path coordinate that specifies a directed distance (306) from the intermediate point to the specified point, and wherein the operation specified by the function call is converting the path coordinates for the specified point to Cartesian coordinates.

13. The computer-readable medium of claim 1 wherein the read function call further specifies a point (304) in Cartesian coordinates, and wherein the operation specified by the function call is identifying a point on the specified path that is nearest the point specified in Cartesian coordinates.

14. The computer-readable medium of claim 13 wherein the identified point (304) is identified in path coordinates, comprising a first path coordinate that specifies a position of an intermediate point on the path and second path coordinate that specifies a directed distance (306) from the intermediate point to the identified point.

15. The computer-readable medium of claim 1 wherein the read function call further specifies a point on the path, and wherein the operation specified by the function call is determining an angle that is tangent to the path at the specified point.

16. The computer-readable medium of claim 12, 13, or 15 wherein the specified path is displayable, the method further comprising using the result of the performing the operation to display the path together with text (920; 1020) that is tangent to the path.

17. The computer-readable medium of claim 1 wherein the operation specified by the function call is determining the length (801, 811, 821) of the path.

18. The computer-readable medium of claim 17, the method further comprising using the result of the performing the operation to display the path together with the path's length (801, 811, 821).

19. The computer-readable medium of claim 1 wherein the operation specified by the function call is determining the area (831) of a region enclosed by the path.

20. The computer-readable medium of claim 19, the method further comprising using the result of the performing the operation to display the path together with the area (831) of a region enclosed by the path.

21. The computer-readable medium of claim 1 wherein the read function call further specifies a second path, and a point in Cartesian coordinates, and wherein the operation specified by the function call is identifying the intersection of the two specified paths that is nearest the point specified in Cartesian coordinates.

22. The computer-readable medium of claim 1 wherein the read function call further specifies a line, and a point in Cartesian coordinates, and wherein the operation specified by the function call is identifying the intersection of the specified line with the specified path that is nearest the point specified in Cartesian coordinates.

23. The computer-readable medium of claim 1 wherein the path is comprised of a series of segments, and wherein the read function call further specifies a coordinate identifying a position of an intermediate point on the path, and wherein the operation specified by the function call is identifying the segment of the series in which the intermediate point occurs.

24. The computer-readable medium of claim 1 wherein the path is comprised of a series of segments, and wherein the operation specified by the function call is determining the number of segments in the series.

25. The computer-readable medium of claim 1 wherein the read function call further specifies a directed distance, and a first point in Cartesian coordinates, and wherein the operation specified by the function call is identifying a second point that is the specified distance from the specified path that is nearest the first point.

26. The computer-readable medium of claim 1 wherein the operation specified by the function call is identifying a result point bound to the specified path.

27. A method in a computing system for evaluating a spreadsheet cell, comprising:

reading a function call stored in the spreadsheet cell, the function call specifying an arbitrary geometric path, and an operation to be performed on the specified path;
performing the specified operation on the specified path; and
attributing one or more values produced by performing the specified operation on the specified path as the evaluated value of the spreadsheet cell.

28. A computing system for evaluating a spreadsheet cell, comprising:

means for reading a function call stored in the spreadsheet cell, the function call specifying an arbitrary geometric path, and an operation to be performed on the specified path;
means for performing the specified operation on the specified path; and
means for attributing one or more values produced by performing the specified operation on the specified path as the evaluated value of the spreadsheet cell.

29. The computing system of claim 28, wherein:

a memory stores contents of the spreadsheet cell, the contents of the spreadsheet cell including the function call; and
said means for performing the specified operation on the specified path and said means for attributing the one or more values produced is a processor.


**Patentansprüche**

1. Computerlesbares Medium, dessen Inhalt ein Rechensystem (100) veranlasst, ein Verfahren zum Bewerten einer Tabellenkalkulationszelle durchzuführen, das umfasst:

Lesen eines in der Tabellenkalkulationszelle gespeicherten Funktionsaufrufs, wobei der Funktionsaufruf einen beliebigen geometrischen Pfad (701, 702; 1000) und eine auf dem spezifizierten Pfad durchzuführende Operation spezifiziert,
Durchführen der spezifizierten Operation auf dem spezifizierten Pfad, und
Zuweisen eines oder mehrerer Werte, die durch das Durchführen der spezifizierten Operation auf dem spezifizierten Pfad erzeugt werden, als des bewerteten Werts der Tabellenkalkulationszelle.

2. Computerlesbares Medium, dessen Inhalt ein Rechensystem (100) veranlasst, das Verfahren von Anspruch 1 durchzuführen, wobei der gelesene Funktionsaufruf weiterhin einen Punkt (304) in Pfadkoordinaten spezifiziert, die eine erste Pfadkoordinate, die eine Position eines Zwischenpunkts auf dem Pfad (701, 702; 1000) spezifiziert, und eine zweite Pfadkoordinate, die eine gerichtete Distanz (306) von dem Zwischenpunkt zu dem spezifizierten Punkt spezifiziert, umfassen.

3. Computerlesbares Medium nach Anspruch 2, wobei der Pfad ein erstes Ende (302; 402) und ein zweites Ende (303; 403) aufweist und wobei die erste Pfadkoordinate die Position des Zwischenpunkts auf dem Pfad durch das Spezifizieren einer absoluten Distanz (305) von dem ersten Ende des Pfads spezifiziert.

4. Computerlesbares Medium nach Anspruch 2, wobei der Pfad ein erstes Ende (302; 402) und ein zweites Ende (303; 403) aufweist und wobei die erste Pfadkoordinate die Position des Zwischenpunkts auf dem Pfad durch das Spezifizieren eines Prozentsatzes der Gesamtdistanz (305) von dem ersten Ende des Pfads zu dem zweiten Ende des Pfads spezifiziert.

5. Computerlesbares Medium nach Anspruch 2, wobei der Pfad ein erstes Ende (302; 402) und ein zweites Ende (303; 403) aufweist und wobei der gelesene Funktionsaufruf weiterhin spezifiziert, ob die erste Pfadkoordinate die Position des Zwischenpunkts auf dem Pfad relativ zu dem ersten Ende oder dem zweiten Ende spezifiziert.

6. Computerlesbares Medium nach Anspruch 1, wobei der Pfad eine Reihe von Segmenten umfasst und wobei der gelesene Funktionsaufruf weiterhin eines aus der Reihe von Segmenten, auf dem die spezifizierte Operation durchzuführen ist, spezifiziert.

7. Computerlesbares Medium nach Anspruch 6, wobei der Pfad ein erstes Ende (302; 402) und ein zweites Ende (303; 403) aufweist und wobei der gelesene Funktionsaufruf weiterhin eines aus der Reihe von Segmenten durch das Spezifizieren entweder des ersten Endes oder des zweiten Endes des Pfads sowie der Anzahl von Segmenten, die das spezifizierte Segment von dem spezifizierten Ende entfernt ist, spezifiziert.

8. Computerlesbares Medium nach Anspruch 1, wobei der spezifizierte Pfad in einem Satz von Pfaddefinition-Tabellenkalkulationszellen definiert ist, wobei das Verfahren das Neubewerten der den Funktionsaufruf enthaltenden Tabellenkalkulationszelle umfasst, wenn bestimmt wird, dass der Wert einer der Pfaddefinition-Tabellenkalkulationszellen des Satzes geändert wurde.

9. Computerlesbares Medium nach Anspruch 1, wobei der Funktionsaufruf den Pfad durch das Einfügen einer Referenz zu einer den Pfad wiedergebenden Pfad-Tabellenkalkulationszelle spezifiziert.

10. Computerlesbares Medium nach Anspruch 9, wobei die Referenz zu der Pfad-Tabellenkalkulationszelle die Pfad-Tabellenkalkulationszelle anhand des Namens identifiziert.

11. Computerlesbares Medium nach Anspruch 9, wobei die Referenz zu der Pfad-Tabellenkalkulationszelle die Pfad-Tabellenkalkulationszelle anhand der Position identifiziert.

12. Computerlesbares Medium nach Anspruch 1, wobei der gelesene Funktionsaufruf weiterhin einen Punkt (304) in Pfadkoordinaten spezifiziert, die eine erste Pfadkoordinate, die eine Position eines Zwischenpunkts auf dem Pfad spezifiziert, und eine zweite Pfadkoordinate, die eine gerichtete Distanz (306) von dem Zwischenpunkt zu dem spezifizierten Punkt spezifiziert, umfassen, und wobei die durch den Funktionsaufruf spezifizierte Operation das Umwandeln der Pfadkoordinaten für den spezifizierten Punkt zu kartesischen Koordinaten ist.

13. Computerlesbares Medium nach Anspruch 1, wobei der gelesene Funktionsaufruf weiterhin einen Punkt (304) in kartesischen Koordinaten spezifiziert, und wobei die durch den Funktionsaufruf spezifizierte Operation das Identifizieren eines Punkts auf dem spezifizierten Pfad, der dem in den kartesischen Koordinaten spezifizierten Punkt am nächsten ist, ist.

14. Computerlesbares Medium nach Anspruch 13, wobei der identifizierte Punkt (304) in Pfadkoordinaten identifiziert wird, die eine erste Pfadkoordinate, die eine Position eines Zwischenpunkts auf dem Pfad spezifiziert, und eine zweite Pfadkoordinate, die eine gerichtete Distanz (306) von dem Zwischenpunkt zu dem identifizierten Punkt spezifiziert, umfassen.

15. Computerlesbares Medium nach Anspruch 1, wobei der gelesene Funktionsaufruf weiterhin einen Punkt auf dem Pfad spezifiziert, und wobei die durch den Funktionsaufruf spezifizierte Operation das Bestimmen eines Winkels, der tangential zu dem Pfad an dem spezifizierten Punkt ist, ist.

16. Computerlesbares Medium nach Anspruch 12, 13 oder 15, wobei der spezifizierte Pfad angezeigt werden kann, wobei das Verfahren weiterhin das Verwenden des Ergebnisses des Durchführens der Operation für das Anzeigen des Pfads zusammen mit einem Text (920; 1020), der tangential zu dem Pfad ist, umfasst.

17. Computerlesbares Medium nach Anspruch 1, wobei die durch den Funktionsaufruf spezifizierte Operation das Bestimmen der Pfadlänge (801, 811, 821) ist.

18. Computerlesbares Medium nach Anspruch 17, wobei das Verfahren weiterhin das Verwenden des Ergebnisses des Durchführens der Operation für das Anzeigen des Pfads zusammen mit der Pfadlänge (801, 811, 821) umfasst.

19. Computerlesbares Medium nach Anspruch 1, wobei die durch den Funktionsaufruf spezifizierte Operation das Bestimmen der Fläche (831) eines durch den Pfad eingeschlossenen Bereichs ist.

20. Computerlesbares Medium nach Anspruch 19, wobei das Verfahren weiterhin das Verwenden des Ergebnisses des Durchführens der Operation für das Anzeigen des Pfads zusammen mit der Fläche (831) eines durch den Pfad eingeschlossenen Bereichs umfasst.

21. Computerlesbares Medium nach Anspruch 1, wobei der gelesene Funktionsaufruf weiterhin einen zweiten Pfad und einen Punkt in kartesischen Koordinaten spezifiziert, und wobei die durch den Funktionsaufruf spezifizierte Operation das Identifizieren der Kreuzung der zwei spezifizierten Pfade, die dem in kartesischen Koordinaten spezifizierten Punkt am nächsten ist, ist.

22. Computerlesbares Medium nach Anspruch 1, wobei der gelesene Funktionsaufruf weiterhin eine Linie und einen Punkt in kartesischen Koordinaten spezifiziert, und wobei die durch den Funktionsaufruf spezifizierte Operation das Identifizieren der Kreuzung der spezifizierten Linie mit dem spezifizierten Pfad, die dem in kartesischen Koordinaten spezifizierten Punkt am nächsten ist, ist.

23. Computerlesbares Medium nach Anspruch 1, wobei der Pfad eine Reihe von Segmenten umfasst und wobei der gelesene Funktionsaufruf weiterhin eine Koordinate, die eine Position eines Zwischenpunkts auf dem Pfad identifiziert, spezifiziert, und wobei die durch den Funktionsaufruf spezifizierte Operation das Identifizieren des Segments der Reihe, in dem der Zwischenpunkt liegt, ist.

24. Computerlesbares Medium nach Anspruch 1, wobei der Pfad eine Reihe von Segmenten umfasst und wobei die durch den Funktionsaufruf spezifizierte Operation das Bestimmen der Anzahl von Segmenten in der Reihe ist.

25. Computerlesbares Medium nach Anspruch 1, wobei der gelesene Funktionsaufruf weiterhin eine gerichtete Distanz und einen ersten Punkt in kartesischen Koordinaten spezifiziert, und wobei die durch den Funktionsaufruf spezifizierte Operation das Identifizieren eines zweiten Punkts mit der spezifizierten Distanz von dem spezifizierten Pfad, der dem ersten Punkt am nächsten ist, ist.

26. Computerlesbares Medium nach Anspruch 1, wobei die durch den Funktionsaufruf spezifizierte Operation das Identifizieren eines an den spezifizierten Pfad gebundenen Ergebnispunkts ist.

27. Verfahren in einem Rechensystem zum Bewerten einer Tabellenkalkulationszelle, umfassend:

Mittel zum Lesen eines in der Tabellenkalkulationszelle gespeicherten Funktionsaufrufs, wobei der Funktionsaufruf einen beliebigen geometrischen Pfad und eine auf dem spezifizierten Pfad durchzuführende Operation spezifiziert,
Mittel zum Durchführen der spezifizierten Operation auf dem spezifizierten Pfad, und
Mittel zum Zuweisen eines oder mehrerer Werte, die durch das Durchführen der spezifizierten Operation auf dem spezifizierten Pfad erzeugt werden, als des bewerteten Werts der Tabellenkalkulationszelle.

28. Rechensystem zum Bewerten einer Tabellenkalkulationszelle, umfassend:

Mittel zum Lesen eines in der Tabellenkalkulationszelle gespeicherten Funktionsaufrufs, wobei der Funktionsaufruf einen beliebigen geometrischen Pfad und eine auf dem spezifizierten Pfad durchzuführende Operation spezifiziert,

Mittel zum Durchführen der spezifizierten Operation auf dem spezifizierten Pfad, und

Mittel zum Zuweisen eines oder mehrerer Werte, die durch das Durchführen der spezifizierten Operation auf dem spezifizierten Pfad erzeugt werden, als des bewerteten Werts der Tabellenkalkulationszelle.

**29.** Rechensystem nach Anspruch 28, wobei:

ein Speicher den Inhalt der Tabellenkalkulationszelle speichert, wobei der Inhalt der Tabellenkalkulationszelle den Funktionsaufruf enthält, und

die Mittel zum Durchführen der spezifizierten Operation auf dem spezifizierten Pfad und die Mittel zum Zuweisen eines oder mehrerer erzeugter Werte ein Prozessor sind.

**Revendications**

**1.** Support lisible par ordinateur dont un contenu amène un système informatique (100) à effectuer un procédé pour évaluer une cellule de feuille de calcul, comprenant les étapes consistant à :

lire un appel de fonction stocké dans la cellule de feuille de calcul, l'appel de fonction spécifiant un chemin géométrique arbitraire (701, 702 ; 1000), et une opération à effectuer sur le chemin spécifié ;

effectuer l'opération spécifiée sur le chemin spécifié ; et

attribuer une ou plusieurs valeurs produites en effectuant l'opération spécifiée sur le chemin spécifié comme valeur évaluée de la cellule de feuille de calcul.

**2.** Support lisible par ordinateur dont un contenu amène un système informatique (100) à effectuer le procédé selon la revendication 1, dans lequel l'appel de fonction de lecture spécifie en outre un point (304) en coordonnées de chemin, comprenant une première coordonnée de chemin qui spécifie une position d'un point intermédiaire sur le chemin (701, 702 ; 1000) et une seconde coordonnée de chemin qui spécifie une distance dirigée (306) allant du point intermédiaire au point spécifié.

**3.** Support lisible par ordinateur selon la revendication 2, dans lequel le chemin a une première extrémité (302 ; 402) et une seconde extrémité (303 ; 403), et dans lequel la première coordonnée de chemin spécifie la position du point intermédiaire sur le chemin en spécifiant une distance absolue (305) à partir de la première extrémité du chemin.

**4.** Support lisible par ordinateur selon la revendication 2, dans lequel le chemin a une première extrémité (302 ; 402) et une seconde extrémité (303 ; 403), et dans lequel la première coordonnée de chemin spécifie la position du point intermédiaire sur le chemin en spécifiant un pourcentage de la distance totale (305) allant de la première extrémité du chemin à la seconde extrémité du chemin.

**5.** Support lisible par ordinateur selon la revendication 2, dans lequel le chemin a une première extrémité (302 ; 402) et une seconde extrémité (303 ; 403), et dans lequel l'appel de fonction de lecture spécifie en outre si la première coordonnée de chemin spécifie la position du point intermédiaire sur le chemin par rapport à la première extrémité ou à la seconde extrémité.

**6.** Support lisible par ordinateur selon la revendication 1, dans lequel le chemin est composé d'une série de segments, et dans lequel l'appel de fonction de lecture spécifie en outre l'un de la série de segments sur laquelle l'opération spécifiée doit être effectuée.

**7.** Support lisible par ordinateur selon la revendication 6, dans lequel le chemin a une première extrémité (302 ; 402) et une seconde extrémité (303 ; 403), et dans lequel l'appel de fonction de lecture spécifie en outre l'un de la série de segments en spécifiant la première extrémité ou la seconde extrémité du chemin ; et le nombre de segments dont est espacé le segment spécifié par rapport à l'extrémité spécifiée.

**8.** Support lisible par ordinateur selon la revendication 1, dans lequel le chemin spécifié est défini dans un ensemble de cellules de feuille de calcul de définition de chemin, le procédé comprenant en outre la réévaluation de la cellule de feuille de calcul contenant l'appel de fonction en réponse à la détermination que la valeur de l'une des cellules de feuille de calcul de définition de chemin de l'ensemble a changé.

9. Support lisible par ordinateur selon la revendication 1, dans lequel l'appel de fonction spécifie le chemin en contenant une référence à une cellule de feuille de calcul de chemin représentant le chemin.

10. Support lisible par ordinateur selon la revendication 9, dans lequel la référence à la cellule de feuille de calcul de chemin identifie la cellule de feuille de calcul de chemin par nom.

11. Support lisible par ordinateur selon la revendication 9, dans lequel la référence à la cellule de feuille de calcul de chemin identifie la cellule de feuille de calcul de chemin par emplacement.

12. Support lisible par ordinateur selon la revendication 1, dans lequel l'appel de fonction de lecture spécifie en outre un point (304) en coordonnées de chemin, comprenant une première coordonnée de chemin qui spécifie une position d'un point intermédiaire sur le chemin et une seconde coordonnée de chemin qui spécifie une distance dirigée (306) allant du point intermédiaire au point spécifié,
et dans lequel l'opération spécifiée par l'appel de fonction convertit les coordonnées de chemin pour le point spécifié en coordonnées Cartésiennes.

13. Support lisible par ordinateur selon la revendication 1, dans lequel l'appel de fonction de lecture spécifie en outre un point (304) en coordonnées Cartésiennes, et dans lequel l'opération spécifiée par l'appel de fonction identifie un point sur le chemin spécifié qui est le plus proche du point spécifié en coordonnées Cartésiennes.

14. Support lisible par ordinateur selon la revendication 13, dans lequel le point identifié (304) est identifié en coordonnées de chemin, comprenant une première coordonnée de chemin qui spécifie une position d'un point intermédiaire sur le chemin et une seconde coordonnée de chemin qui spécifie une distance dirigée (306) allant du point intermédiaire au point identifié.

15. Support lisible par ordinateur selon la revendication 1, dans lequel l'appel de fonction de lecture spécifie en outre un point sur le chemin, et dans lequel l'opération spécifiée par l'appel de fonction détermine un angle qui est tangent au chemin au niveau du point spécifié.

16. Support lisible par ordinateur selon la revendication 12, 13, ou 15, dans lequel le chemin spécifié est affichable, le procédé comprenant en outre l'utilisation du résultat de l'exécution de l'opération pour afficher le chemin conjointement avec du texte (920 ; 1020) qui est tangent au chemin.

17. Support lisible par ordinateur selon la revendication 1, dans lequel l'opération spécifiée par l'appel de fonction détermine la longueur (801, 811, 821) du chemin.

18. Support lisible par ordinateur selon la revendication 17, le procédé comprenant en outre l'utilisation du résultat de l'exécution de l'opération pour afficher le chemin conjointement avec la longueur du chemin (801, 811, 821).

19. Support lisible par ordinateur selon la revendication 1, dans lequel l'opération spécifiée par l'appel de fonction détermine la zone (831) d'une région entourée par le chemin.

20. Support lisible par ordinateur selon la revendication 19, le procédé comprenant en outre l'utilisation du résultat de l'exécution de l'opération pour afficher le chemin conjointement avec la zone (831) d'une région entourée par le chemin.

21. Support lisible par ordinateur selon la revendication 1, dans lequel l'appel de fonction de lecture spécifie en outre un second chemin, et un point en coordonnées Cartésiennes, et dans lequel l'opération spécifiée par l'appel de fonction identifie l'intersection des deux chemins spécifiés qui est la plus proche du point spécifié en coordonnées Cartésiennes.

22. Support lisible par ordinateur selon la revendication 1, dans lequel l'appel de fonction de lecture spécifie en outre une ligne, et un point en coordonnées Cartésiennes, et dans lequel l'opération spécifiée par l'appel de fonction identifie l'intersection de la ligne spécifiée avec le chemin spécifié qui est la plus proche du point spécifié en coordonnées Cartésiennes.

23. Support lisible par ordinateur selon la revendication 1, dans lequel le chemin est composé d'une série de segments, et dans lequel l'appel de fonction de lecture spécifie en outre une coordonnée identifiant une position d'un point intermédiaire sur le chemin, et dans lequel l'opération spécifiée par l'appel de fonction identifie le segment de la série dans lequel le point intermédiaire apparaît.

24. Support lisible par ordinateur selon la revendication 1, dans lequel le chemin est composé d'une série de segments, et dans lequel l'opération spécifiée par l'appel de fonction détermine le nombre de segments dans la série.

25. Support lisible par ordinateur selon la revendication 1, dans lequel l'appel de fonction de lecture spécifie en outre une distance dirigée, et un premier point en coordonnées Cartésiennes, et dans lequel l'opération spécifiée par l'appel de fonction identifie un second point qui est la distance spécifiée par rapport au chemin spécifié qui est le plus proche du premier point.

26. Support lisible par ordinateur selon la revendication 1, dans lequel l'opération spécifiée par l'appel de fonction identifie un point de résultat lié au chemin spécifié.

27. Procédé dans un système informatique pour évaluer une cellule de feuille de calcul, comprenant les étapes consistant à :

   lire un appel de fonction stocké dans la cellule de feuille de calcul, l'appel de fonction spécifiant un chemin géométrique arbitraire, et une opération à effectuer sur le chemin spécifié ;
   effectuer l'opération spécifiée sur le chemin spécifié ; et
   attribuer une ou plusieurs valeurs produites en effectuant l'opération spécifiée sur le chemin spécifié comme valeur évaluée de la cellule de feuille de calcul.

28. Système informatique pour évaluer une cellule de feuille de calcul, comprenant :

   des moyens pour lire un appel de fonction stocké dans la cellule de feuille de calcul, l'appel de fonction spécifiant un chemin géométrique arbitraire, et une opération à effectuer sur le chemin spécifié ;
   des moyens pour effectuer l'opération spécifiée sur le chemin spécifié ; et
   des moyens pour attribuer une ou plusieurs valeurs produites en effectuant l'opération spécifiée sur le chemin spécifié comme valeur évaluée de la cellule de feuille de calcul.

29. Système informatique selon la revendication 28, dans lequel :

   la mémoire stocke un contenu de la cellule de feuille de calcul, le contenu de la cellule de feuille de calcul incluant l'appel de fonction ; et
   lesdits moyens pour effectuer l'opération spécifiée sur le chemin spécifié et lesdits moyens pour attribuer les une ou plusieurs valeurs produites sont un processeur.

computer system     ⌐ 100

CPU     ⌐ 101

memory     ⌐ 102

persistent storage     ⌐ 103

computer-readable media drive     ⌐ 104

network connection     ⌐ 105

*FIG. 1*

shape library — 220

210 — user interface

user sheets

path definition — 230

260 — displayed document

231

function invocation — 232

spreadsheet engine

240

250 — function library

**FIG. 2**

**FIG. 3**

**FIG. 4**

EP 1 635 269 B1

501
511
512
502
503
504
513
505
506 507 508

**FIG. 5**

601
602

**FIG. 6**

Outset/Inset Path

Path

702

701

+r

-r

703

704

Outside

706

Inside

705

*FIG. 7*

**FIG. 8**

**FIG. 9**

**FIG. 10**

**EP 1 635 269 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6373490 B1
- US 20020109704 A1
- US 5467441 A
- US 811234